# EUROPÄISCHE PATENTSCHRIFT

(11) **EP 3 718 386 B1**
(45) Veröffentlichungstag und Bekanntmachung des Hinweises auf die Patenterteilung: **24.12.2025**
(21) Anmeldenummer: 20164959.7
(22) Anmeldetag: 23.03.2020
(51) Int. Cl.: A01B 17/00, A01C 7/16, A01B 49/06

(54) **PFLUG MIT EINEM LANGGESTRECKTEN PFLUGRAHMEN**
PLOUGH WITH AN ELONGATED PLOUGH FRAME
CHARRUE À CHÂSSIS ALLONGÉ

(30) Priorität: 21.03.2019 DE 102019107332
(43) Veröffentlichungstag der Anmeldung: 07.10.2020
(73) Patentinhaber: Maier, Mathias, 84573 Schönberg (DE)
(72) Erfinder: Maier, Mathias, 84573 Schönberg (DE)
(74) Vertreter: Rothkopf, Ferdinand

(56) Entgegenhaltungen:
- CN-A- 101 637 076
- DE-A1- 102017 114 883
- DE-B- 1 270 871
- US-A- 3 834 330
- US-A- 3 990 662

## Beschreibung

### Hintergrund der Erfindung

Die Erfindung betrifft ein Verfahren zur Verwendung eines Pfluges mit einem langgestreckten Pflugrahmen, an dem mehrere Pflugschare in Reihe aufeinanderfolgend angeordnet sind, zum Wenden von Erde jeweils einer zugehörigen Scholle auf einem Acker mittels Ziehen des Pfluges in eine Pflügerichtung, wobei eine Ausbringeinrichtung zum Ausbringen eines ersten und eines zweitens Schüttguts an dem Pflug vorgesehen ist, wobei das Ausbringen des ersten und zweiten Schüttguts pneumatisch erfolgt, und wobei die Ausbringeinrichtung je Pflugschar mit einem ersten zugehörigen Ausgaberohr und mit mindestens einem zweiten Ausgaberohr gestaltet wird. Ein solcher Pflug ist beispielsweise aus DE 10 2017 114883 A1 bekannt. Bei diesem Pflug ist allerdings mit dem ersten Ausgaberohr das erste Saatgut hinter den zugehörigen Pflugschar und damit in den beim Pflügen dort entstehenden Freiraum bzw. die dort entstehende Furche einzubringen.

Pflügen ist das Wenden einer Ackerkrume mit Hilfe eines Pflugs. Vorliegend wird als Pflug nur ein solches Ackergerät verstanden, dessen Pflugschar zum Wenden der zugehörigen Scholle führt.

Durch Pflügen wird die Bodenstruktur aufgelockert. Somit ergibt sich eine größere, aber auch raue Oberfläche. Um in eine solche raue Oberfläche eine Saat einzubringen ist es üblich, den Acker danach mit der Egge zu glätten. Das Feld wird zur Saatbereitung "geeggt".

Das hier diskutierte Pflügen bzw. der hier diskutierte Pflug steht damit im Gegensatz zum Grubbern bzw. einem Grubber. Ein Grubber ist ein landwirtschaftliches Gerät zur nichtwendenden Bodenbearbeitung, das zur Lockerung und Krümelung des Bodens sowie zur Unkrautbekämpfung und Einarbeitung von humosen Materialien in den Boden eingesetzt wird. Die mit einem Grubber bearbeitete Oberfläche ist im Vergleich zu einer mit einem Pflug bearbeiten Oberfläche vergleichsweise glatt. Grubber sind als Teil von Saatbettkombinationen zur Bereitung eines optimalen Saatbettes bekannt. Die nachlaufenden Geräte, meist Schrägstab-Wälzeggen (Krümler) oder auch Saateggen, krümeln den gelockerten Boden weiter und drücken ihn zur Vorbereitung des notwendigen Erdschlusses des einzubringenden Saatgutes in Saattiefe an.

### Zugrundeliegende Aufgabe

Der Erfindung liegt die Aufgabe zugrunde, ein Verfahren zur Verwendung eines Pfluges mit mehreren Pflugscharen zum Wenden von Erde bereitzustellen, das im Vergleich zu herkömmlichen Pflügen eine vergrößerte Funktionalität aufweist.

### Erfindungsgemäße Lösung

Diese Aufgabe ist erfindungsgemäß mit einem Verfahren zur Verwendung eines Pfluges gemäß Anspruch 1 gelöst.

Mit dem erfindungsgemäßen Verfahren zur Verwendung eines Pfluges ist es möglich, während des Pflügens eines Ackers zeitgleich zwei Schüttgüter, wie insbesondere Saatgut und/oder Dünger auszubringen und dabei die Lage des ausgebrachten Schüttguts auf dem Acker nicht nur in der Ausbringungsbreite zu beeinflussen, sondern auch hinsichtlich der Ausbringungstiefe. Dabei wird gemäß der Erfindung das erste Schüttgut an der sich beim Wenden befindenden Scholle mittels eines ersten Ausgaberohrs am zugehörigen Pflugschar in einem genau passenden Bereich derart positioniert ausgebracht, dass sich das Schüttgut nach dem Wenden der Scholle dann in der richtigen Ausbringungstiefe befindet. Darüber hinaus wird gemäß der Erfindung mittels mindestens eines zweiten Ausgaberohrs das zweite Schüttgut oben auf die frisch gewendete Erde verteilt.

Auf diese Weise kann gemäß der Erfindung, das haben Untersuchungen gezeigt, beim Ausbringen von Ansaat insbesondere für Zwischenfrüchte das zugehörige Saatgut sehr vorteilhaft auf dem jeweiligen Acker ausgebracht werden. Insbesondere kann Saatgut in unterschiedliche Saathorizonte im Boden gelegt werden. Schattenkeimer, wie Bohnen oder Erbsen, gelangen in einen tieferen Saathorizont, während zugleich Lichtkeimer, wie Senf Phacelia, obenauf verstreut werden. Aber auch zum Ausbringen von Saatgut für Hauptfrüchte ist das erfindungsgemäße Pflügeverfahren sowie die zugehörige Pflügevorrichtung vorteilhaft verwendbar. Besonders vorteilhaft können Leguminosen in tiefe Saathorizonte und Feinsaaten bzw. Feinsämereien im oberen Saathorizont separat verteilt werden. Die Erfindung beruht dabei auf der Erkenntnis, dass herkömmliche Saatmischungen eigentlich unterschiedliche Saathorizonte benötigen und es mittels der erfindungsgemäßen Lösung möglich ist, gerade diese Anforderung auf sehr einfache Weise zu erfüllen. Darüber hinaus ist dieses erfindungsgemäße Säen in mehrere Schichten zugleich mit nur einem einzigen Arbeitsgang des Pflügens möglich. So können mittels der Erfindung auch Überfahrten auf dem zugehörigen Acker, die mit Zeitaufwand, Treibstoffverbrauch, Maschinenabnutzung und zusätzlicher Bodenverdichtung verbunden wären, vorteilhaft vermieden werden. Das erfindungsgemäße Verfahren des Pflügens und zugleich Säens ist eine sehr wirtschaftliche Technik, da in einem Arbeitsgang mehrere Arbeitsschritte bewältigt werden. So kann erfindungsgemäß vorteilhaft Getreide gesät und zugleich eine Grunddüngung ausgebracht werden. Ferner kann insbesondere Raps gesät und zugleich Schneckenkorn ausgebracht werden. Darüber hinaus kann vorteilhaft gesät und zugleich Schwefelkorn gegen Wildschweine ausgebracht werden. Auch eine erfindungsgemäß erreichte Wasserersparnis wird immer wichtiger, denn jeder gesonderte Arbeitsgang führt ansonsten zur Wasserverdunstung auf dem Acker. Mit dem erfindungsgemäßen Verfahren wird auch das Wetterrisiko zwischen Ackern und Aussaat verringert und es besteht keine bzw. geringe Windanfälligkeit beim Aussäen. Je schneller der Boden mit Zwischenfrüchten bedeckt ist, desto weniger Unkraut oder Ungräser können keimen. Die vergleichsweise raue Scholle vom Pflügen bleibt erfindungsgemäß bis zeitgleich stattfindenden bzw. sofort nachgeschalteten Säen erhalten, wodurch ein Abschwemmen bzw. Verschlämmen des Bodens vermieden wird.

Als Zwischenfrucht bezeichnet man in der Landwirtschaft eine Feldfrucht, die zwischen anderen zur Hauptnutzung dienenden Feldfrüchten als Gründüngung oder zur Nutzung als Tierfutter angebaut wird. Durch Zwischenfruchtanbau lassen sich verschiedene Effekte erzielen. Er kann dazu dienen, Stickstoff aus der Luft aufzunehmen und ihn in den Zellen der Zwischenfrüchte zu binden. Die Zwischenfrüchte werden dann später untergearbeitet, so dass der in ihnen gebundene Stickstoff für die nächste Frucht in der Fruchtfolge zur Verfügung steht. Da Stickstoff ein wichtiger Pflanzennährstoff ist, kann durch den Zwischenfruchtanbau der Ertrag gesteigert werden.

Andere Effekte bestehen in Anregung und Förderung der Bodenorganismen. Verdichtete oder durch Auswaschung geschädigte Böden lassen sich mit Zwischenfrüchten regenerieren. Auch gibt es Feldfrüchte, die nicht unmittelbar nacheinander angebaut werden sollten. Hier dient die Zwischenfrucht als trennende Kultur in der Fruchtfolge. Ferner kann man Böden nach Infektionskrankheiten wie Pilz-, Viren oder Bakterienbefall durch den Anbau von Zwischenfrüchten etwas Ruhe gönnen.

In Verbindung mit dem erfindungsgemäßen Pflug bevorzugte Zwischenfrüchte sind ferner einjähriges Weidelgras, diverse Kleesorten, wie mehrjähriges Kleegras und Alexandriner-Klee, Grünroggen, Sommer- und Winterraps, Weißer Senf, Lupine und andere Hülsenfrüchte, wie Futtererbsen und Saatwicken, Ölrettich, Phacelia, Markstammkohl sowie Winterrüben.

Mit dem erfindungsgemäßen Verfahren ist es ferner möglich, an dem einzelnen Pflugschar des erfindungsgemäßen Pfluges sicherzustellen, dass das zweite Schüttgut während des Wendens der Scholle nicht mit in den Boden eingearbeitet wird, sondern sicher obenauf auf der Oberfläche des gewendeten Bodens zu liegen kommt.

Vorzugsweise wird ferner die Ausbringeinrichtung mit mindestens einer Prallplatte gestaltet, auf die das Schüttgut von dem mindestens einen Ausgaberohr durch dessen Mündung aufzubringen ist. Ferner ist vorteilhaft zum Verteilen des ausgebrachten Schüttguts vor der Mündung des mindestens einen Ausgaberohrs ein Schleppschlauch, ein Schleppschuh, ein Saatstriegel, ein Luftinjektor oder eine Verteildüse vorgesehen.

Mittels der Prallplatte kann das am Ausgaberohr ausgebrachte Saatgut verteilt und auf diese Art die Ausbringungsfläche verbreitert werden.

Vorteilhaft wird ferner die Ausbringeinrichtung mit einer Verstellvorrichtung versehen ist, mittels der die ersten und/oder die zweiten Ausgaberohre hinsichtlich ihrer Mündungen relativ zum zugehörigen Pflugschar zugleich verstellbar sind.

Mit der derartigen Ausbringungseinrichtung ist eine gemeinsame Lageänderung der Mündungen von einer Reihe von ersten bzw. zweiten Ausgaberohren relativ zum jeweiligen Pflugschar mit nur einer Betätigung der zugehörigen Verstellvorrichtung möglich. Die Verstellvorrichtung ist dabei vorteilhaft als Schwenkeinrichtung ausgebildet.

Die Ausbringungsvorrichtung kann ferner vorteilhaft als eigenständige Vorrichtung ausgebildet sein, die am Pflug demontierbar anzubringen ist. Die derartige Vorrichtung ist leicht nachzurüsten und auch für Reparatur und Wartungszwecke leicht zu entfernen. Dies ist insbesondere bei Volldrehpflügen von Vorteil, wie nachfolgend noch genauer erläutert wird.

Die Ausbringeinrichtung wird ferner vorteilhaft mit mindestens einem zweigeteilten Vorratsbehälter zum Bevorraten des ersten und zweiten Schüttguts versehen.

Auf diese Weise können, wie oben bereits angesprochen, vorteilhaft unterschiedlichste Schüttgüter, wie insbesondere Saatgut und Dünger, vorzugsweise aber auch den Ackerboden verbessernde Substanzen, wie etwa Kalksand oder Torfgranulat, aus nur einem Vorratsbehälter ausgebracht werden.

Besonders bevorzugt weist die Ausbringeinrichtung mindestens einen ersten Vorratsbehälter auf, der zum Anbringen an der Front eines Schleppers angepasst ist, und/oder mindestens einen zweiten Vorratsbehälter auf, der zum Anbringen am Heck des Schleppers angepasst ist. Die derartige Anbringung von Vorratsbehältern vorne und/oder hinten am Schlepper ermöglicht eine vorteilhafte Lastverteilung auf die Achsen des Schleppers. Vorteilhaft ist insbesondere eine Anbringung an der Front des Schleppers, wenn es sich bei dem erfindungsgemäßen Pflug um einen vergleichsweise schweren Volldrehpflug handelt. Unter Volldrehpflug wird dabei ein Pflug verstanden, der eine obere Reihe Pflugschare und eine untere Reihe Pflugschare aufweist, die abwechselnd in den Ackerboden einzusetzen sind. Ein Volldrehpflug hat in der Regel vorne an seinem Dreipunktturm ein Drehwerk, an dem der die Pflugschare tragende Pflugrahmen gedreht werden kann. An dem Pflugrahmen sind hinter dem Drehwerk nach oben und nach unten hin abstehend die Pflugschare bzw. Pflugkörper angeordnet. Ein Volldrehpflug wird am Ende eines Feldes aus der gerade gepflügten Furche gehoben, während des Wendens des Schleppers gedreht und dann beim anschließenden Pflügen der nächsten Furche in gedrehter Lage wieder eingesetzt.

Mit dem Anordnen von Vorratsbehältern an der Front des Schleppers steht insbesondere für einen Volldrehpflug am Heck mehr Platz für die Drehbewegung des Volldrehpfluges zur Verfügung.

Daher ist eine vorteilhafte Weiterbildung der erfindungsgemäßen Lösung auch speziell darauf gerichtet, dass der Pflug als Volldrehpflug mit einer Reihe erster Schare und einer Reihe zweiter Schare gestaltet wird, wobei die Reihen Schare mittels Drehen des Pfluges abwechselnd in die Erde des zu bearbeitenden Ackers einzusetzen sind.

Bei einem Volldrehpfluges ist die erfindungsgemäße Ausbringeinrichtung vorteilhaft an einer rahmenartigen Haltevorrichtung angebracht, die vorzugsweise starr zwischen der ersten Reihe Pflugschare und der zweiten Reihe Pflugschare am zugehörigen Pflugrahmen angeordnet ist. Alternativ kann diese eine Haltevorrichtung auch derart schwenkbar am Pflugrahmen angeordnet sein, dass sie von der ersten Reihe Pflugschare zu der zweiten Reihe Pflugschare und zurück geschwenkt werden kann. Die Schwenklage wird dann so gewählt, dass die Ausbringeinrichtung jeweils zu den in den Boden einzusetzenden Pflugscharen gestellt ist. Bei einem Volldrehpflug mit vergleichsweise großer Bauhöhe ist es vorteilhaft, zwei Haltevorrichtungen vorzusehen, an denen jeweils eine Reihe von Ausgaberohren angebracht sind. Insbesondere können diese einzelnen Haltevorrichtungen dann auch einzeln relativ zum Pflugrahmen verstellt werden.

Gemäß der Erfindung wird die Ausbringeinrichtung ferner bevorzugt mit einer Zuführvorrichtung zum Zuführen des Schüttgutes zu den mehreren ersten und zweiten Ausgaberohren versehen, wobei zwei Verteiler vorgesehen sind, von denen mit dem ersten Verteiler das erste Schüttgut auf die ersten Ausgaberohre und mit dem zweiten Verteiler das zweite Schüttgut auf die zweiten Ausgaberohre zu verteilen ist.

Der einzelne Verteiler verteilt dabei vorteilhaft das herangeführte Schüttgut auf mehrere Leitungen bzw. Rohre oder Schläuche, die dann jeweils zu einem einzelnen Ausgaberohr führen. So ist eine genaue Dosierung des Schüttguts am jeweiligen Ausgaberohr möglich. Die Verteiler sind vorteilhaft als Pilzköpfe gestaltet und insbesondere vorteilhaft nebeneinander an einem Aufnahmeturm eines Drehpflugs positioniert. Der Aufnahmeturm dient dabei für den Drehpflug zur Aufnahme und Rotation an einem zugehörigen Schlepper.

Bei dem erfindungsgemäßen Volldrehpflug wird ferner vorteilhaft die Ausbringeinrichtung mit einer Zuführvorrichtung zum Zuführen des ersten bzw. zweiten Schüttguts zu den mehreren ersten und zweiten Ausgaberohren versehen, wobei zwei Schlauchgruppen vorgesehen sind, von denen mit der ersten Schlauchgruppe das erste Schüttgut zu den ersten Ausgaberohren und mit der zweiten Schlauchgruppe das zweite Schüttgut zu den zweiten Ausgaberohren zu fördern ist.

Die derartigen Schlauchgruppen sind vorteilhaft derart zu bündeln, dass das damit entstehende Schlauchbündel an einem zugehörigen Drehpflug als S-Form vorne an dessen Aufnahmeturm zu verlegen ist. Das derart verlegte Schlauchbündel kann dann der Drehbewegung des Pflugrahmens des Drehpflugs folgen, ohne dass die Schläuche durch diese Bewegung geschädigt würden.

Die erfindungsgemäße Ausbringeinrichtung wird schließlich vorzugsweise auch noch mit mindestens einem Gebläse zum Fördern des Schüttgutes versehen und/oder an dem mindestens einen Ausgaberohr ist vorzugsweise ein Luftabscheider zum Abscheiden von Luft aus dem Ausgaberohr vorgesehen.

Das mindestens eine Gebläse ermöglicht eine einfache Zuführung des bzw. der Schüttgüter mittels Rohre bzw. Schläuche auch über größere Entfernungen. Dabei kann das Schüttgut insbesondere von der Front des Schleppers bis zu dessen Heck gefördert werden.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:

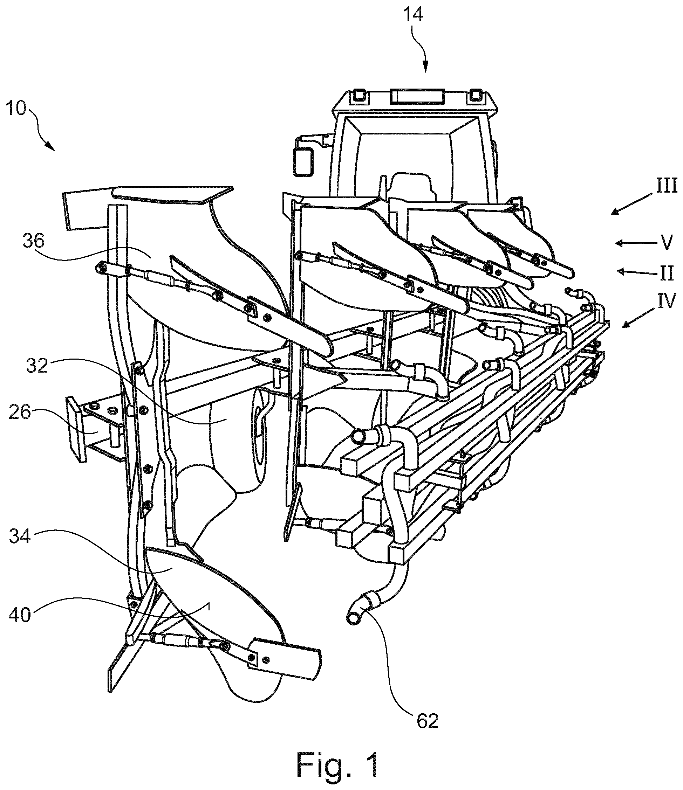

- Fig. 1: eine perspektivische Ansicht eines bei einem erfindungsgemäßen Verfahren verwendeten Pfluges von schräg hinten,

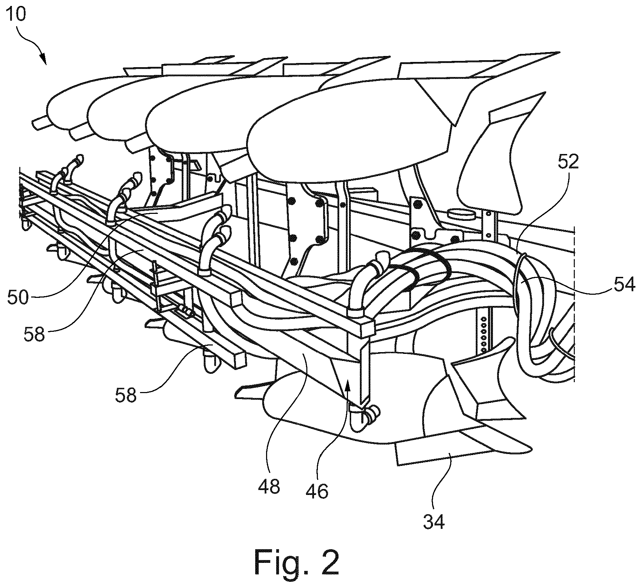

- Fig. 2: die Ansicht II gemäß Fig. 1,
- Fig. 3: die Ansicht III gemäß Fig. 1,

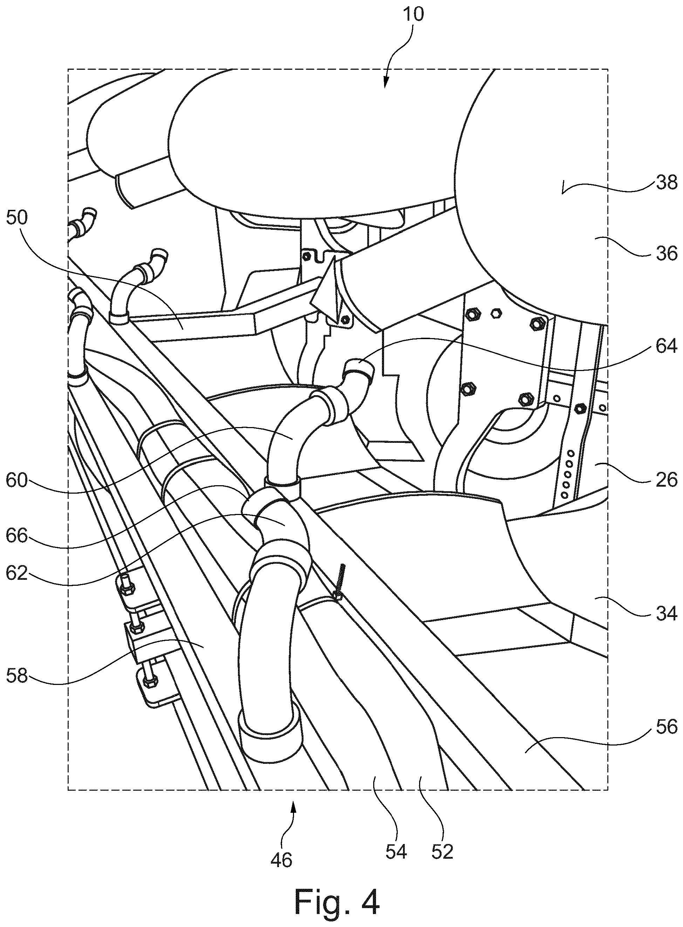

- Fig. 4: die Ansicht IV gemäß Fig. 1 und
- Fig. 5: die Ansicht V gemäß Fig. 1.

### Detaillierte Beschreibung des Ausführungsbeispiels

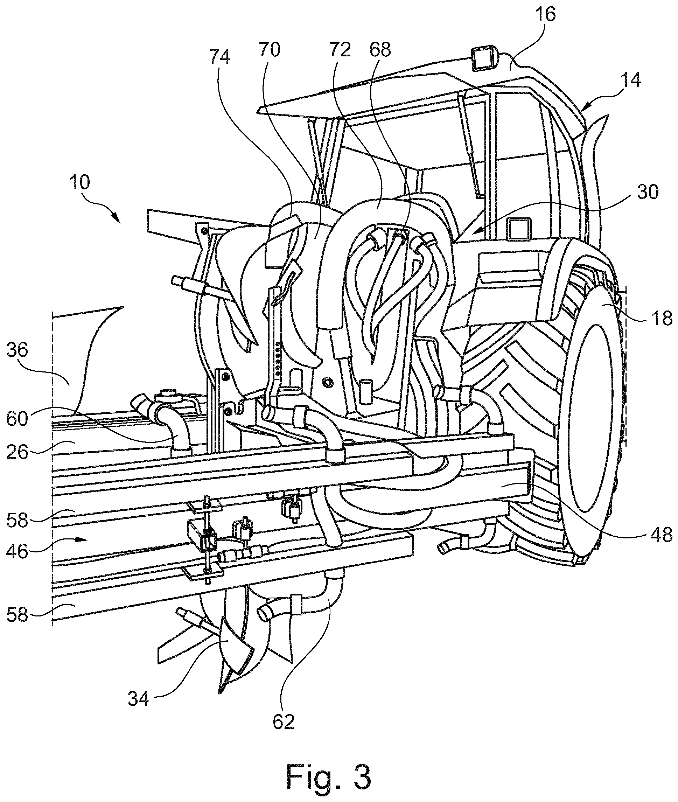

In den Fig. ist ein Pflug 10 dargestellt, der an einem Schlepper 14 angehängt ist. Von dem Schlepper 14 ist insbesondere in Fig. 3 dessen Kabine 16 und ein rechtes Schlepperrad 18 zu erkennen. Bei einem Vorgang des Pflügens eines Ackers (nicht dargestellt) entlang einer Furche mittels des Pflugs 10 läuft dieses rechte Schlepperrad 18 durch eine Furche. Die Furche und der sich am Schlepper 14 befindende Pflug 10 trennen den Acker so in eine ungepflügte Fläche und eine gepflügte Fläche auf.

Der Pflug 10 ist mit einem langgestreckten Pflugrahmen 26 gestaltet, der bezogen auf die Hauptfahrtrichtung des Schleppers 14 bzw. Pflügerichtung vorne mittels einer Drehvorrichtung 28 an einer Stützvorrichtung 30 in Form eines Aufnahme- bzw. Dreipunktturms befestigt ist. Der Pflugrahmen 26 kann bei angehobenem Pflug 10 an der Drehvorrichtung 28 um 180° gedreht bzw. hin und her geschwenkt werden. Er ist also als Volldrehpflug gestaltet.

Die Stützvorrichtung 30 ist am Schlepper 14 befestigt und dort, in der Regel mittels einer Dreipunkthydraulik anhebbar und absenkbar. Im abgesenkten Zustand ist der Pflugrahmen 26 an seinem hinteren Ende mittels eines Rades 32 in Form eines Tastrades bzw. Stützrades auf der ungepflügten Fläche des Ackers leicht abgestützt.

Am Pflugrahmen 26 sind in der dargestellten Drehlage vier nach unten hin abstehende, erste Pflugschare 34 in Reihe aufeinanderfolgend angeordnet. In gleicher Weise sind an dem Pflugrahmen 26 vier nach oben hin abstehende, zweite Pflugschare 36 in Reihe aufeinanderfolgend angeordnet. Die ersten und zweiten Pflugschare 34 bzw. 36 liegen einander also in Bezug auf den Pflugrahmen 26 gegenüber. Bei der dargestellten Drehlage sind die ersten Pflugschare 34 in den Acker einzusetzen, während die zweiten Pflugschare 36 nach oben hin vom Acker weg ragen.

Jedes der Pflugschare 34 und 36 weist bezogen auf die Pflügerichtung eine Vorderseite 38 sowie eine Rückseite 40 auf. Mittels der Vorderseite 38 schiebt das jeweilige in den Acker eingesetzte erste Pflugschar Erde vor sich her und wendet diese in Form einer Scholle. Nachfolgend wirft das Pflugschar die Scholle als frisch gewendete Erde neben sich ab. Hinter dem jeweiligen Pflugschar bildet sich an dessen Rückseite 40 zugleich ein Freiraum als kurzer Abschnitt einer Furche. Der Freiraum hinter dem letzten Pflugschar bildet dann jeweils die eigentliche neue Furche.

An dem Pflug 10 ist eine Ausbringeinrichtung 46 zum Ausbringen von zwei Schüttgütern, vorliegend einem Saatgut von Lichtkeimern und einem Saatgut von Dunkelkeimern, angebracht.

Die Ausbringeinrichtung 46 weist einen langgestreckten, sich im Wesentlichen parallel zum Pflugrahmen 26 erstreckenden Ausbringeinrichtungsrahmen 48 auf, der mittels einer Stützvorrichtung 50 an dem Pflugrahmen 26 ortsfest befestigt ist. Die Stützvorrichtung 50 steht in Form zweier Balken, einer im vorderen Teil des Pflugrahmens 26 und einer im hinteren Teil des Pflugrahmens 26, von dem Pflugrahmen 26 zwischen den beiden Reihen von Pflugscharen 34 bzw. 36 im Wesentlichen quer bzw. waagrecht ab. Der Ausbringeinrichtungsrahmen 48 befindet sich damit zwischen den vom Pflugrahmen 26 abgewandten Teilen der Pflugschare 34 und 36.

Zu dem Ausbringeinrichtungsrahmen 48 sind vom Schlepper 14 ausgehend ein erstes Bündel an Zuführschläuchen 52 und ein zweites Bündel an Zuführschläuchen 54 geführt. Ferner sind an dem Ausbringeinrichtungsrahmen 48 insgesamt vier Längsholme, nämlich zwei Längsholme 56 an der zu den Pflugscharen 34 bzw. 36 gewandten Seite und zwei Längsholme 58 an der von den Pflugscharen 34 bzw. 36 abgewandten Seite des Ausbringeinrichtungsrahmens 48 angeordnet. Die Längsholme 56 und 58 sind jeweils mittels einer Verstellvorrichtung relativ zum Ausbringeinrichtungsrahmen 48 verstellbar, insbesondere schwenkbar. Jeder der ersten Zuführschläuche 52 geht zu einem der Längsholme 56 am Ausbringeinrichtungsrahmen 48 und dort in ein erstes Ausgaberohr 60 über, das von dem Ausbringeinrichtungsrahmens 48 abstehend an diesem vorgesehen ist. Jeder der zweiten Zuführschläuche 54 geht zu einem der Längsholme 56 am Ausbringeinrichtungsrahmen 48 und dort in ein zweites Ausgaberohr 62 über, das ebenfalls von dem Ausbringeinrichtungsrahmen 48 abstehend an diesem vorgesehen ist.

Derart stehen vier erste Ausgaberohre 60 und vier zweite Ausgaberohre 62 von dem Ausbringeinrichtungsrahmen 48 nach oben hin und in gleicher Weise nach unten hin ab. Die Ausgaberohre 60 sind derart lang und derart ausgerichtet, dass sich zugehörige Mündungen 64 der ersten Ausgaberohre 60 jeweils in unmittelbarer Nähe der Vorderseite 38 des jeweils zugehörigen Pflugschars befinden. Zugehörige Mündungen 66 der zweiten Ausgaberohre 62 befinden sich hingegen jeweils unmittelbar neben einem jeweils zugehörigen Pflugschar. Pro Pflugschar 34 bzw. 36 ist so jeweils genau ein erstes Ausgaberohr 60 und genau ein zweites Ausgaberohr 62 vorgesehen. Unter "unmittelbarer Nähe" wird hier ein Abstand von der Vorderseite bzw. der Seite des Pflugschars von zwischen 5 cm und 75 cm (Zentimeter), vorzugsweise zwischen 20 cm und 50 cm, insbesondere zwischen 10 cm und 30 cm verstanden. Die Ausgaberohre 62 sind als solche mittels zweier gewinkelter und dabei relativ zueinander verdrehbarer Rohrabschnitte gebildet.

Auf diese Weise kann mit der Ausbringeinrichtung 46 durch die ersten Ausgaberohre 60 ein erstes Saatgut von Dunkelkeimern als erstes Schüttgut in die sich während des Pflügens dort beim Wenden befindende Scholle hinein ausgebracht werden. Über das derart ausgebrachte erste Schüttgut wird dann während des Umlegens der Scholle weitere Erde verteilt.

Zugleich kann mit der der Ausbringeinrichtung 46 durch die zweiten Ausgaberohre 62 ein zweites Saatgut von Lichtkeimern als zweites Schüttgut oben auf die frisch gewendete Erde neben dem jeweiligen Pflugschar verteilt werden.

Die Verteilung des Saatguts an den Mündungen 64 und 66 hinsichtlich Ablagebreite und Ablagetiefe kann mittels einer Prallscheibe, einem Luftinjektor, einem Schleppschuh, einem Schleppschlauch, einem Sähschar oder einer Verteildüse (nicht dargestellt) weiter verbessert werden.

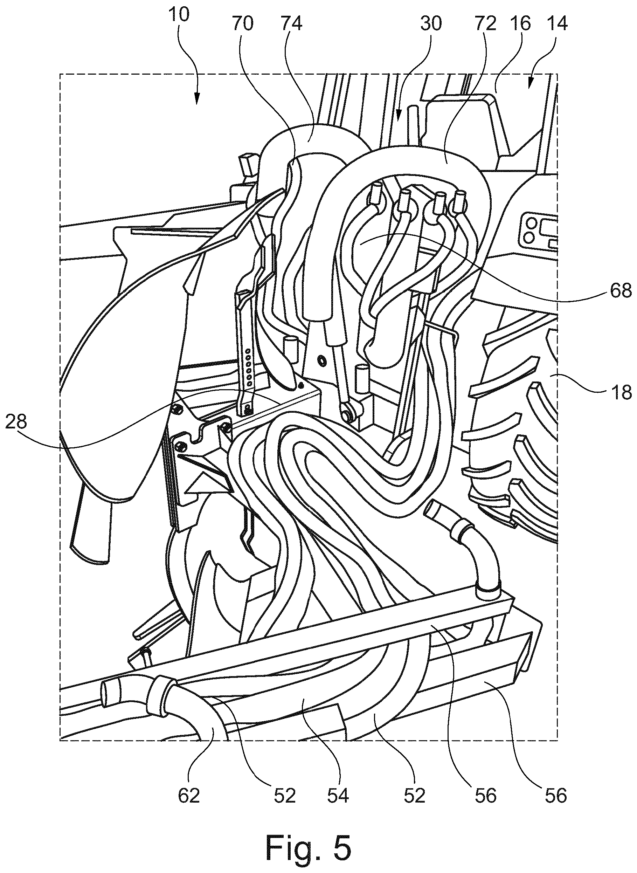

Die jeweiligen Schüttgüter werden zu den Zuführschläuchen 52 und 54 mittels zweier Verteiler, einem ersten Verteiler 68 und einem zweiten Verteiler 70 gefördert, die an der Stützvorrichtung 30 obenauf und nebeneinander angeordnet sind. Die beiden Verteiler 68 und 70 verteilen das jeweils zugeführte Schüttgut auf die einzelnen Zuführschläuche 52 bzw. 54. Die Zuführschläuche 52 und 54 sind in Bündeln nebeneinander und zusammen in einer S-Form von den beiden Verteilern 68 und 70 zu dem Ausbringeinrichtungsrahmen 48 geführt. Dabei verlaufen die Bündel aus Zuführschläuchen 52 und 54 nahe an der Drehvorrichtung 28, so dass sie bei der Drehbewegung des als Drehpflugs gestalteten Pflugs 10 nicht stören. Der Transport der Schüttgüter zu den Verteilern 68 und 70 erfolgt durch jeweils einen vergleichsweise großen Transportschlauch 72 bzw. 74, die in den Darstellungen der Fig. 3 und 5 abgekoppelt auf den Verteilern 68 und 70 hängen. In einem angekoppelten Zustand führen diese Transportschläuche 72 bzw. 74 zu Transportrohren, durch die hindurch das Schüttgut aus einem zweigeteilten Vorratsbehälter oder zwei einzelnen Vorratsbehältern (nicht dargestellt) zugeführt wird.

Das Zuführen der Schüttgüter zu den Verteilern 68 und 70 sowie durch die Zuführschläuche 52 und 54 kann mittels Gebläsen mit an den Mündungen 64 bzw. 66 angeordneten Luftabscheidern aus den Vorratsbehältern erfolgen, die dabei vorteilhaft an der Front und/oder am Heck des Schleppers 14 angeordnet sein können.

### Bezugszeichenliste

- 10: Pflug
- 14: Schlepper
- 16: Kabine
- 18: rechtes Schlepperrad
- 26: Pflugrahmen
- 28: Drehvorrichtung
- 30: Stützvorrichtung
- 32: Rad
- 34: Pflugschar
- 36: Pflugschar
- 38: Vorderseite des Pflugschars
- 40: Rückseite des Pflugschars
- 46: Ausbringeinrichtung
- 48: Ausbringeinrichtungsrahmen
- 50: Stützvorrichtung
- 52: erster Zuführschlauch
- 54: zweiter Zuführschlauch
- 56: Längsholm
- 58: Längsholm
- 60: erstes Ausgaberohr
- 62: zweites Ausgaberohr
- 64: Mündung des ersten Ausgaberohrs
- 66: Mündung des zweiten Ausgaberohrs
- 68: erster Verteiler
- 70: zweiter Verteiler
- 72: Transportschlauch
- 74: Transportschlauch

## Patentansprüche

1. Verfahren zur Verwendung eines Pfluges (10) mit einem langgestreckten Pflugrahmen (26), an dem mehrere Pflugschare (34, 36) in Reihe aufeinanderfolgend angeordnet sind, zum Wenden von Erde jeweils einer zugehörigen Scholle auf einem Acker mittels Ziehen des Pfluges (10) in eine Pflügerichtung, wobei eine Ausbringeinrichtung (46) zum Ausbringen eines ersten und eines zweitens Schüttguts an dem Pflug (10) vorgesehen wird, wobei das Ausbringen des ersten und zweiten Schüttguts pneumatisch erfolgt, wobei das jeweilige Pflugschar (34, 36) eine zur Pflügerichtung gewandte Vorderseite (38) aufweist, wobei die Ausbringeinrichtung (46) je Pflugschar (34, 36) mit einem ersten zugehörigen Ausgaberohr (60) gestaltet wird, wobei das erste Ausgaberohr (60) mit seiner Mündung (64) an der Vorderseite (38) des Pflugschars (34, 36) vorgesehen wird und mittels des ersten Ausgaberohrs (60) das erste Schüttgut in die sich dort während des Pflügens beim Wenden befindende Scholle hinein in einem genau passenden Bereich derart positioniert ausgebracht wird, dass sich das erste Schüttgut nach dem Wenden der Scholle dann in der richtigen Ausbringungstiefe befindet, und wobei die Ausbringeinrichtung (46) je Pflugschar (34, 36) mit mindestens einem zweiten zugehörigen Ausgaberohr (62) gestaltet wird, wobei das zweite Ausgaberohr (62) mit seiner Mündung (66) neben dem Pflugschar (34, 36) vorgesehen wird und **dadurch gekennzeichnet, dass** mittels des zweiten Ausgaberohrs (62) das zweite Schüttgut oben auf die frisch gewendete Erde verteilt wird.

2. Verfahren nach Anspruch 1,
**dadurch gekennzeichnet, dass** die Ausbringeinrichtung (46) mit mindestens einer Prallplatte, einem Schleppschlauch, einem Schleppschuh, einem Luftinjektor oder einer Verteildüse gestaltet wird, zum Verteilen des Schüttguts vor der Mündung (64, 66) des jeweiligen Ausgaberohrs (60, 62).

3. Verfahren nach Anspruch 1 oder 2,
**dadurch gekennzeichnet, dass** die Ausbringeinrichtung (46) mit einer Verstellvorrichtung versehen wird, mittels der die ersten und/oder die zweiten Ausgaberohre (60, 62) hinsichtlich ihrer Mündungen (64, 66) relativ zum zugehörigen Pflugschar (34, 36) zugleich verstellbar sind.

4. Verfahren nach einem der Ansprüche 1 bis 3,
**dadurch gekennzeichnet, dass** die Ausbringeinrichtung (46) mindestens einen zweigeteilten Vorratsbehälter aufweist, zum Bevorraten des ersten und zweiten Schüttguts.

5. Verfahren nach einem der Ansprüche 1 bis 4,
**dadurch gekennzeichnet, dass** die Ausbringeinrichtung (46) mit mindestens einen ersten Vorratsbehälter versehen wird, der zum Anbringen an der Front eines Schleppers (14) angepasst ist, und/oder mit mindestens einen zweiten Vorratsbehälter, der zum Anbringen am Heck des Schleppers (14) angepasst ist.

6. Verfahren nach einem der Ansprüche 1 bis 5,
**dadurch gekennzeichnet, dass** der Pflug als Volldrehpflug mit einer Reihe erster Pflugschare (34) und einer Reihe zweiter Pflugschare (36) gestaltet wird, wobei die Reihen Pflugschare (34, 36) mittels Drehen des Pfluges (10) abwechselnd in die Erde des zu bearbeitenden Ackers einzusetzen sind.

7. Verfahren nach einem der Ansprüche 1 bis 6,
**dadurch gekennzeichnet, dass** die Ausbringeinrichtung (46) mit einer Zuführvorrichtung zum Zuführen des Schüttgutes zu den mehreren ersten und zweiten Ausgaberohren (60, 62) versehen wird, wobei zwei Verteiler vorgesehen werden, von denen mit dem ersten Verteiler das erste Schüttgut auf die ersten Ausgaberohre (60) und mit dem zweiten Verteiler das zweite Schüttgut auf die zweiten Ausgaberohre (62) zu verteilen ist.

8. Verfahren nach einem der Ansprüche 1 bis 7,
**dadurch gekennzeichnet, dass** die Ausbringeinrichtung (46) mit einer Zuführvorrichtung zum Zuführen des ersten bzw. zweiten Schüttguts zu den mehreren ersten und zweiten Ausgaberohren (60, 62) versehen wird, wobei zwei Schlauchgruppen vorgesehen werden, von denen mit der ersten Schlauchgruppe das erste Schüttgut zu den ersten Ausgaberohren (60) und mit der zweiten Schlauchgruppe das zweite Schüttgut zu den zweiten Ausgaberohren (62) zu fördern ist.

9. Verfahren nach einem der Ansprüche 1 bis 8,
**dadurch gekennzeichnet, dass** die Ausbringeinrichtung (46) mit mindestens einem Gebläse zum Fördern des ersten und/oder des zweiten Schüttguts versehen wird.

## Claims

1. Method for using a plough (10) with an elongated plough frame (26) on which a plurality of ploughshares (34, 36) are arranged in succession in a row, for turning soil of a respective associated clod on a field by pulling the plough (10) in a ploughing direction, wherein a dispensing device (46) for dispensing a first and a second bulk material is provided on the plough (10), wherein the dispensing of the first and second bulk material is carried out pneumatically, wherein the respective ploughshare (34, 36) has a front side (38) facing the ploughing direction, wherein the dispensing device (46) is designed with a first associated outlet pipe (60) for each ploughshare (34, 36), wherein the first outlet pipe (60) is provided with its mouth (64) at the front side (38) of the ploughshare (34, 36) and by means of the first outlet pipe (60) the first bulk material is dispensed into the clod located there during the ploughing process when turning in a precisely fitting area in such a way that the first bulk material is then at the correct dispensing depth after the clod has been turned, and wherein the dispensing device (46) is designed with at least one second associated outlet pipe (62) for each ploughshare (34, 36), wherein the second outlet pipe (62) is provided with its mouth (66) next to the ploughshare (34, 36), **characterised in that** by means of the second outlet pipe (62) the second bulk material is distributed on top of the freshly turned soil.

2. Method according to claim 1,
**characterised in that** the dispensing device (46) is designed with at least one baffle plate, a drag hose, a drag shoe, an air injector or a distribution nozzle for distributing the bulk material in front of the mouth (64, 66) of the respective outlet pipe (60, 62).

3. Method according to claim 1 or 2,
**characterised in that** the dispensing device (46) is provided with an adjusting device by means of which the first and/or the second outlet pipes (60, 62) are simultaneously adjustable with respect to their mouths (64, 66) relative to the associated ploughshare (34, 36).

4. Method according to any one of claims 1 to 3,
**characterised in that** the dispensing device (46) has at least one two-part storage container for storing the first and second bulk materials.

5. Method according to any one of claims 1 to 4,
**characterised in that** the dispensing device (46) is provided with at least one first storage container which is adapted for mounting on the front of a tractor (14), and/or with at least one second storage container which is adapted for mounting on the rear of the tractor (14).

6. Method according to any one of claims 1 to 5,
**characterised in that** the plough is designed as a reversible plough with a row of first ploughshares (34) and a row of second ploughshares (36), wherein the rows of ploughshares (34, 36) are to be used alternately in the soil of the field to be worked by rotating the plough (10).

7. Method according to any one of claims 1 to 6,
**characterised in that** the dispensing device (46) is provided with a feeding device for feeding the bulk material to the plurality of first and second outlet pipes (60, 62), wherein two distributors are provided, of which the first distributor is used to distribute the first bulk material to the first outlet pipes (60) and the second distributor is used to distribute the second bulk material to the second outlet pipes (62).

8. Method according to any one of claims 1 to 7,
**characterised in that** the dispensing device (46) is provided with a feeding device for feeding the first or second bulk material to the plurality of first and second outlet pipes (60, 62), wherein two groups of hoses are provided, of which the first group of hoses is used to convey the first bulk material to the first outlet pipes (60) and the second group of hoses is used to convey the second bulk material to the second outlet pipes (62).

9. Method according to any one of claims 1 to 8,
**characterised in that** the dispensing device (46) is provided with at least one blower for conveying the first and/or the second bulk material.

## Revendications

1. Procédé d'utilisation d'une charrue (10) avec un châssis de charrue (26) allongé, sur lequel plusieurs socs de charrue (34, 36) sont disposés successivement en rangée, pour retourner la terre d'une motte de terre respective sur un champ en tirant la charrue (10) dans une direction de labourage, un dispositif de distribution (46) pour distribuer un premier et un second matériau en vrac étant prévu sur la charrue (10), la distribution du premier et du second matériau en vrac s'effectuant pneumatiquement, le soc de charrue (34, 36) respectif présentant une face avant (38) tournée vers la direction de labourage, le dispositif de distribution (46) étant conçu avec un premier tuyau de sortie (60) associé par soc de charrue (34, 36), le premier tuyau de sortie (60) étant prévu avec son embouchure (64) sur la face avant (38) du soc de charrue (34, 36) et, au moyen du premier tuyau de sortie (60), le premier matériau en vrac est distribué dans la motte de terre se trouvant là lors du labourage pendant le retournement dans une zone exactement adaptée de telle sorte que le premier matériau en vrac se trouve ensuite à la bonne profondeur de distribution après le retournement de la motte de terre, et le dispositif de distribution (46) étant conçu avec au moins un second tuyau de sortie (62) associé par soc de charrue (34, 36), le second tuyau de sortie (62) étant prévu avec son embouchure (66) à côté du soc de charrue (34, 36) et, **caractérisé en ce que**, au moyen du second tuyau de sortie (62), le second matériau en vrac est réparti sur le dessus de la terre fraîchement retournée.

2. Procédé selon la revendication 1,
**caractérisé en ce que** le dispositif de distribution (46) est conçu avec au moins une plaque déflectrice, un tuyau souple, un patin, un injecteur d'air ou une buse de distribution, pour répartir le matériau en vrac devant l'embouchure (64, 66) du tuyau de sortie respectif (60, 62).

3. Procédé selon la revendication 1 ou 2,
**caractérisé en ce que** le dispositif de distribution (46) est pourvu d'un dispositif de réglage au moyen duquel les premiers et/ou les seconds tuyaux de sortie (60, 62) sont réglables simultanément quant à leurs embouchures (64, 66) par rapport au soc de charrue (34, 36) associé.

4. Procédé selon l'une des revendications 1 à 3,
**caractérisé en ce que** le dispositif de distribution (46) comporte au moins un réservoir de stockage en deux parties, pour stocker le premier et le second matériau en vrac.

5. Procédé selon l'une des revendications 1 à 4,
**caractérisé en ce que** le dispositif de distribution (46) est pourvu d'au moins un premier réservoir de stockage qui est adapté pour être monté à l'avant d'un tracteur (14), et/ou d'au moins un second réservoir de stockage qui est adapté pour être monté à l'arrière du tracteur (14).

6. Procédé selon l'une des revendications 1 à 5,
**caractérisé en ce que** la charrue est conçue comme une charrue réversible avec une rangée de premiers socs de charrue (34) et une rangée de seconds socs de charrue (36), les rangées de socs de charrue (34, 36) devant être utilisées alternativement dans la terre du champ à travailler en faisant tourner la charrue (10).

7. Procédé selon l'une des revendications 1 à 6,
**caractérisé en ce que** le dispositif de distribution (46) est pourvu d'un dispositif d'alimentation pour amener le matériau en vrac aux plusieurs premiers et seconds tuyaux de sortie (60, 62), deux répartiteurs étant prévus, dont le premier répartiteur sert à répartir le premier matériau en vrac sur les premiers tuyaux de sortie (60) et le second répartiteur sert à répartir le second matériau en vrac sur les seconds tuyaux de sortie (62).

8. Procédé selon l'une des revendications 1 à 7,
**caractérisé en ce que** le dispositif de distribution (46) est pourvu d'un dispositif d'alimentation pour amener le premier ou le second matériau en vrac aux plusieurs premiers et seconds tuyaux de sortie (60, 62), deux groupes de tuyaux étant prévus, dont le premier groupe de tuyaux sert à transporter le premier matériau en vrac vers les premiers tuyaux de sortie (60) et le second groupe de tuyaux sert à transporter le second matériau en vrac vers les seconds tuyaux de sortie (62).

9. Procédé selon l'une des revendications 1 à 8,
**caractérisé en ce que** le dispositif de distribution (46) est pourvu d'au moins une soufflante pour transporter le premier et/ou le second matériau en vrac.
